# EUROPEAN PATENT SPECIFICATION

(11) **EP 4 133 930 B1**
(45) Date of publication and mention of the grant of the patent: **23.04.2025**
(21) Application number: 21190290.3
(22) Date of filing: 09.08.2021
(51) Int. Cl.: A01C 7/08

(54) **AGRICULTURAL MACHINE**
LANDWIRTSCHAFTLICHE MASCHINE
MACHINE AGRICOLE

(43) Date of publication of application: 15.02.2023
(73) Proprietor: Torrico S.r.l., 36053 Gambellara (VI) (IT)
(72) Inventor: PEGORARO, Luciano, 36053 Gambellara (VI) (IT)
(74) Representative: Burchielli, Riccardo

(56) References cited:
- EP-A1- 1 763 984
- DE-A1- 102019 128 863

## Description

This invention generally refers to an agricultural machine, in particular a seeding machine and/or a fertilizer spreader, and possibly combined with fixed and/or foldable or reclosable agricultural equipment, such as harrows, tine cultivators, disc cultivators, rollers, etc.

Specifically, the support of the distribution head, mounted for example on seed drills, includes actuators, connected to joints which, controlled by sensors, which can be positioned according to different configurations, are designed to control the inclination of the distribution head itself, with respect to a horizontal direction. Generally, an agricultural machine is a machine or mechanism built to perform one or more agricultural jobs. It can be of the fixed type, self-propelled or carried by tractors; in the latter case the machine can be simply towed, as in the case of the plough or connected to a power take-off in the case of the fertilizer spreader machine.

In detail, the prior art sowing and/or fertilizer spreaders usually comprise a hopper for containing seeds and/or fertilizing products, normally positioned on the rear of the tractor, near the sowing devices, and in some cases complete with a hydraulic screw loader, and one or more volumetric dosers, which normally interact with a distribution unit rigidly fixed in the machine. The distribution unit is of the pneumatic type or air jet type, driven by a turbine and possibly equipped with a selector for common and fine seeds, and it is designed for transporting, distributing and conveying the seeds to the sowing devices; the sowing machine can also comprise one or more sowing bars, equipped with seed covering combs.

One of the factors that affects the quantity of seed sent by the distribution unit to the sowing devices is related to the size of the seed itself; in particular, with large seeds it is possible to generate distribution differences between the distribution rows of up to plus or minus 30% compared to the optimal case.

Moreover, the quantity of seed that is sent from the distribution unit to the sowing device also depends on the inclination of the horizontal plane of the ground, as the distribution head is rigidly fixed in the machine and undergoes all the movements and inclinations to which it a tractor is subject whilst driving on the ground.

For this reason it is necessary to provide a specific distribution unit, which allows for a constant distribution of the seeds, regardless of environmental conditions, and which is adaptable to any type of construction of agricultural machinery or tractors.

All this implies sizing, production and management costs, as well as energy consumption of the sowing machines and/or fertilizer spreaders which are in any case higher than those necessary for the effective use of the machine.

Relevant prior art also comprises patent documents EP1763984A1 and DE102019128863.

The aim of the invention is, therefore, to overcome the above-mentioned drawbacks and, in particular, to provide a distribution unit for granular and/or powder products, in particular for agricultural seeding machines and/or fertilizer spreaders, which allows soil treatment operations (sowing, fertilizer distribution, etc.) to be carried out, avoiding differences in the distribution of the product caused by the inclination of the distribution unit which usually occur while the machine is travelling on the ground.

Another aim of the invention is to provide a unit for the distribution of granular and/or powder products, in particular for agricultural seeding machines and/or fertilizer spreaders, which allows a constant quantity of product to be distributed, allowing the flow of product to be distributed in the soil to be adequately controlled.

Another aim of the invention is to provide a unit for the distribution of granular and/or powder products, which can be used in particular on agricultural seeding machines and/or fertilizer spreaders, which allows, compared to traditional machines, an adequate working of the soil to be carried out, easily and in a shorter time, guaranteeing, at the same time, contained dimensions and reduced costs and an effective autonomy of the product distribution.

Another aim of the invention is to provide a distribution unit for granular and/or powder products, in particular for seeding machines and/or fertilizer spreaders, which allows the difference in distribution of the products, for example of the seeds, to be controlled even when they are of large and/or variable dimensions.

A further aim of the invention is to provide a distribution unit for granular and/or powder products which, when in use, is independent of the inclination of the horizontal plane of the ground, allowing a constant distribution of the seeds, regardless of the environmental conditions, and which is adaptable to any type of construction of agricultural machinery or tractors.

Not least, an aim of the invention is to provide a unit for distributing granular and/or powder products, which can be used in particular on agricultural seeding machines and/or fertilizer spreaders, which has an extremely stable, safe, reliable structure and interchangeable with the previous embodiments, as well as being modular and flexible in the assembly and simple and inexpensive to produce, compared to the traditional distribution units.

These and other aims, according to the invention, are achieved by providing an agricultural machine, in particular a seeding machine and/or a fertilizer spreader, according to the appended claim 1.

Other detailed technical features are described in the following claims. Advantageously, the distribution unit allows the desired treatment of the soil (sowing, distribution of fertilizing substances or other substances, etc.) to be carried out, solving the problem of distributing the products to the devices for sowing and/or spreading on the ground, even in conditions of sloping ground or in the presence of seeds of different sizes; in this way it is possible to ensure that the quantity of product, coming from the dispenser and sent to the sowing bars, is always constant for each individual distribution device.

The distribution unit has a structure composed of stainless steel elements and new plastic materials for a greater reliability of the entire machine where the above-mentioned distribution unit is installed; moreover, the assembly of the unit has characteristics of modularity and flexibility which are decidedly innovative and advantageous, as well as providing a perfect interchangeability with the previous embodiments of distribution units for agricultural machines and, in particular, for agricultural seeding machines and/or fertilizer spreaders.

The electronic control of the distribution unit can be integrated with the control of other electronic systems present in the agricultural machine or of the stand-alone type, in such a way as to indicate and control, for example, that the distribution process is constant regardless of the difference in levels and the roughness of the ground. More in detail, the sensors belonging to this distribution unit can comprise different positioning configurations, particularly to allow a distribution of the seeds independent of the inclination of the ground, as will be described in more detail below.

Further characteristics and advantages of a distribution unit for granular and/or powder products, in particular for agricultural seeding machines and/or fertilizer spreaders, according to the invention, will more fully emerge from the description that follows, relative to a preferred embodiment thereof given by way of non-limiting example of the distribution unit according to the invention, and with reference to the appended drawings, in which:
- Figure 1 is a perspective view of the distribution unit for granular and/or powder products, in particular for agricultural seeding machines and/or fertilizer spreaders, according to the invention;
- Figure 2 is a perspective detailed view of the distribution unit for granular and/or powder products of Figure 1, according to the invention;
- Figures 3a, 3b and 3c show a first series of side views of the distribution unit for granular and/or powder products of Figure 1, in various processing positions, according to the invention;
- Figures 4a, 4b and 4c show a further series of side views of the distribution unit for granular and/or powder products of Figure 1, in the processing positions of the respective Figures 3a, 3b, 3c, according to the invention.

Firstly, it should be noted that, even if the following description refers to the use of a distribution unit of a sowing machine, the invention can be, according to the invention as defined by the claims, any type of agricultural machine or equipment, possibly combinable with reclosable and non-reclosable machines, such as harrows, tine cultivators, disc cultivators, rollers, etc., with reclosable and non-reclosable tools, designed for preparing and/or working the soil.

The machine, in its entirety, can also be understood as a single machine for the distribution of a granular product (seed) and/or powder (fertilizer) or any other chemical product for agricultural purposes, regardless of the combination with a machine specifically usable for working soil. Moreover, the above-mentioned agricultural machine, in particular a seeding machine, in its entirety, can also be understood as being connectable or connected to a drive unit, for example a tractor, as already described in the prior art.

With reference to the above-mentioned drawings, the distribution unit or distribution head, according to the invention, comprises a main tubular element 1, inside of which is transported, usually by pneumatic means and after having been dosed, by means of dosing means of known type, the granular and/or powder product (seeds, fertilizer products, fertilizers, etc.), which is conducted, in a single flow, starting from an accumulation tank or hopper (not shown), to the shaped sockets 2 designed for distribution of the product.

More specifically, the tubular element 1 is connected centrally to a structure usually with a circular geometry, forming a head 14 of the distribution unit, comprising an upper plate 3 and a lower plate, not visible in the attached figures, fixed to each other at a predetermined distance, by means of connecting screws, from which the shaped sockets 2 branch off and reach the sowing or spreading devices for the granular and/or powder products in the ground.

The sockets 2 are engaged, between the upper plate 3 and the lower plate, in such a way as to face the circumferential compartment, not visible in the drawings, which is present between the plates and which is closed centrally by the cover 4, to which the granular and/or powder product to be distributed reaches.

In turn, the cover 4 is screwed onto the upper plate 3 by means of wing nuts 5, which are keyed onto respective pins (not visible).

According to example and preferred embodiments of the invention, the cover 4 and the upper plate 3 can constitute a single piece.

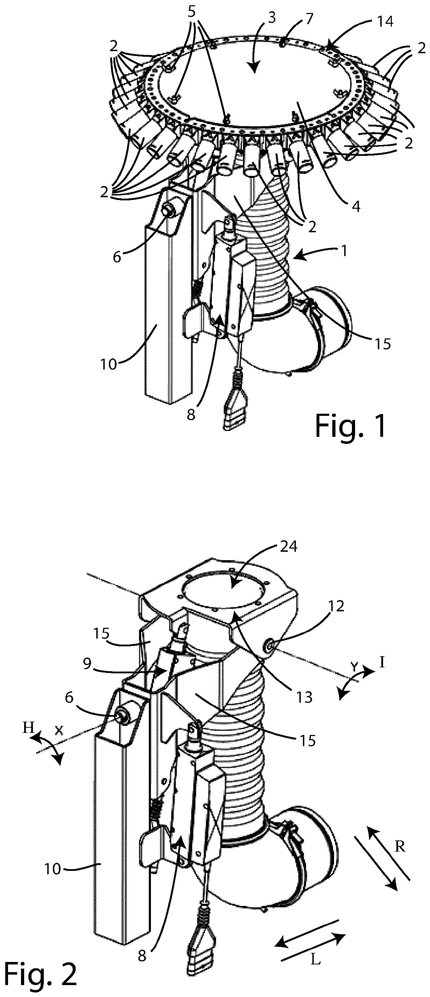

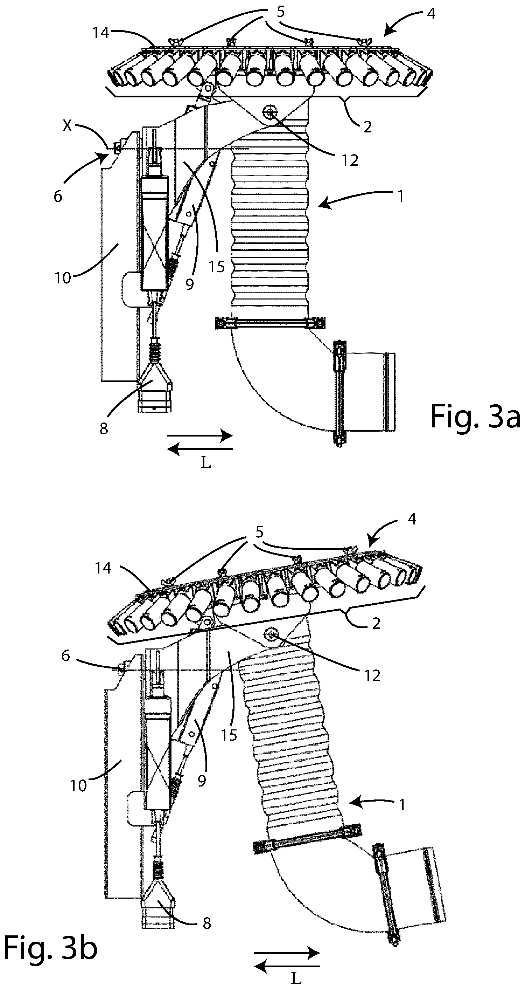

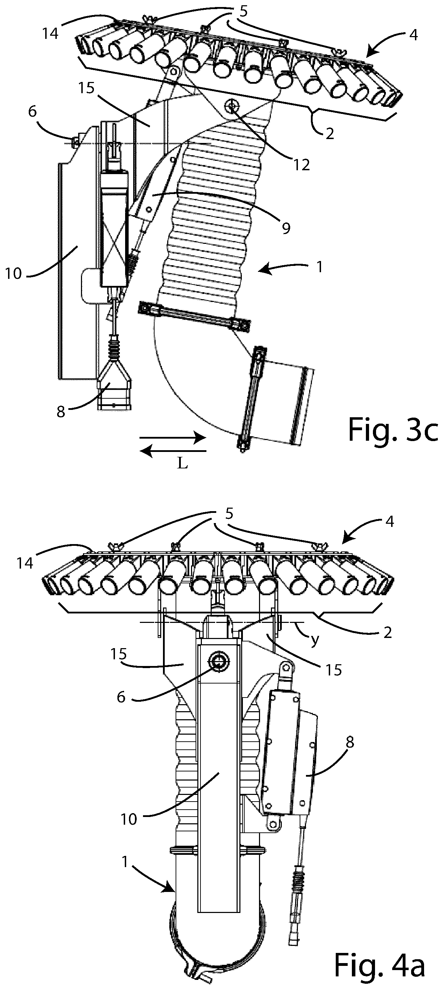

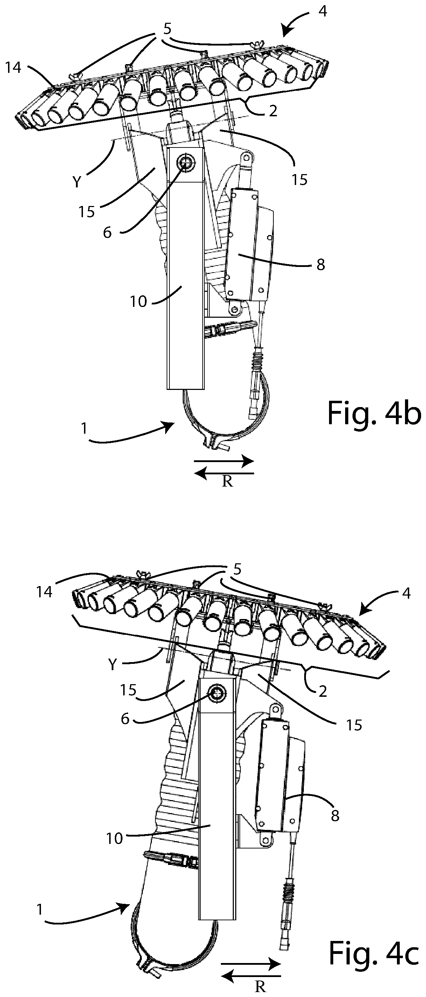

In practice, thanks to the use of a blower or a centrifugal fan, positioned near the accumulation hopper and not shown in the accompanying drawings, the products to be distributed in the ground are sent vertically along the tubular element 1 and come out at the central opening 24 (Figure 2) of the distribution head, to be then sent to the distribution devices of the products in the ground through the openings provided at the shaped sockets 2 (Figures 1, 3a-3c, 4a-4c).

According to further non-limiting embodiments, this tubular element 1 is rigid and comprises a flexible final portion, at the head 14 of the distribution unit; this configuration is advantageously designed to increase the homogeneity of the seeds leaving the distribution head.

In a position adjacent to the tubular element 1 there is a first support element 10, connected through at least one tab 15 for fixing to the distribution unit. In particular, the first support element 10 comprises a first joint 6, which is moved by means of a first actuator 8. Advantageously, two fixing tabs 15 are used and the first actuator 8 is connected laterally to the support element 10, on one of the fixing tabs 15 and at the joint 6, so as to move it along an axis X, which is substantially parallel to the direction of travel of the agricultural machine and perpendicular to the direction of movement of the product inside the tubular element 1.

At the central opening 24 there is a second support element 13 comprising two further joints 12, located on the opposite ends of the tubular element 1 and, in particular, at the fixing tabs 15. Advantageously, the two joints 12 are moved by means of a second actuator 9, connected to at least one of the joints 12, so as to move the support element 13 according to an axis Y of the joint, orthogonal to the above-mentioned X axis.

The first support element 10 and the second support element 13 are advantageously connected to each other through the two fixing tabs 15. Again advantageously, the first and second joints 6 and 12 are independent of each other.

Advantageously, the above-mentioned joints 6 and 12 rotate, respectively, around the axes X, Y, according to the directions H and I, visible in particular in Figure 2.

In detail, an actuation of the joint 6 around the axis X generates a rotation in direction H with a consequent inclination of the head 14 of the distribution unit, which is moved according to the directions labelled R in the accompanying drawings.

Similarly, an actuation of the joint 12 around the axis Y generates a rotation in direction I with a consequent inclination of the head 14 of the distribution unit, which is moved according to the directions L, orthogonal to the directions R.

Advantageously, the above-mentioned distribution unit, according to other embodiments, which are simpler and cheaper to implement, can be moved through a single axis X or Y of the joint, chosen indifferently.

In particular, the movement of the distribution unit through a single axis X or Y of the joint can be carried out for agricultural work on slopes, which are always travelled along by the agricultural machines in the same way; in this case, there is no need for control on both the axes X and Y of the joint.

Again advantageously, the two axes X and Y of the joint are positioned as close as possible, in terms of construction, to the head 14 of the distribution unit so as to limit the linear displacement according to the directions R and/or L of the unit during the relative inclinations, with respect to the terrestrial horizontal, which usually occur when the agricultural machine travels on sloping ground.

The compensation of the inclination of the distribution unit is extremely important, as it is known that, with products to be distributed with large dimensions and/or in the presence of sloping and/or uneven ground, if the dosing mushroom always remains in a horizontal condition with respect to the ground it does not present any problem in the distribution of the products to be distributed.

The actuators 8, 9, which, as mentioned, are connected to the joints 6, 12, are preferably of the linear type, for example cylinders, and of the electric type, in such a way as to have a force which allows the distribution unit to be straightened according to the directions of articulation.

A sensor 7 of the distribution unit is configured to detect the inclination of the head 14 of the distribution unit, with respect to the terrestrial horizon. Advantageously, this sensor 7 is arranged in such a way as to control the inclination of the distribution unit and of the relative head 14, regardless of the plane on which the machine is moving.

Furthermore, the actuators 8, 9 are advantageously controlled and piloted by an electronic control unit, which receives input data from the inclination sensor 7, processes it and consequently controls the two actuators 8, 9 to return the head 14 of the distribution unit to a horizontal position. According to a first configuration, which is not according to the invention, the inclination sensor 7 can be positioned inside the head 14 of the distribution unit itself and set by checking that the initial inclination datum is equal to 0 (that is to say, that there is no inclination) or, according to a variant embodiment, which is not according to the invention, the inclination sensor 7 can be placed inside the agricultural machine and/or on the relative frame and, in that case, the electronic control unit drives the actuators 8, 9 by means of an appropriate compensation algorithm.

According to the invention, the sensor 7 is arranged on the tractor to which the sowing machine is connected, merely by way of example, in the front position with respect to it and/or in the rear position, in such a way as to have a more stable control of the inclination of the head 14. Moreover, advantageously, the sensor 7 can be connected directly to the on-board electronics of the above-mentioned tractor.

Generally, in order to correct the inclination of the head 14 of the distribution unit, a hinge can be applied on the sowing machine and/or on the tractor and connected to the first actuator 8 and/or to the second actuator 9, in such a way that this inclination correction is not affected by structural oscillations of the distribution unit itself, as the tractor and/or the sowing machine are more stable as they are placed directly on the ground. Again advantageously, the actuators for the compensation of the inclination of the distribution unit can be connected either directly to the above-mentioned hinge, in particular by means of a wire, or, alternatively, have a wireless connection.

According to example and preferred, but not limiting, embodiments of the invention, the shaped sockets 2 have a concentric radial extension in the direction of the central opening 24 and facing it, in such a way that, advantageously, there is no loss of product (for example, seeds) to distribute.

It has been found that the embodiment described fully achieves the above-mentioned aims, since it is possible to provide a new distribution head of the "gyroscopic" type, which is able to constantly maintain a horizontal position, even on sloping ground, in order to avoid problems of distribution between the tubular elements of the distribution unit of the product to be distributed.

Finally, it should be noted that the distribution unit according to the invention can be used, as well as for the seeds, combined with a seeding machine, also for any other granular and/or powder product, such as, for example, manure, fertilizers, etc., maintaining the same reliability and efficiency characteristics as previously indicated.

The characteristics of the distribution unit for granular and/or powder products, in particular for agricultural seeding machines and/or fertilizer spreaders, according to the invention, clearly emerge from the description, as do the advantages thereof.

In particular, they concern the following aspects:
- simplified construction method;
- ease of production and assembly;
- modularity and flexibility of assembly of the outlet pipes and of the entire system;
- possibility of carrying out soil treatment operations (sowing, distribution of fertilizers, etc.) without distribution differences caused by the inclination of the distribution unit which occur during the passage of the agricultural machine on sloping land;
- constant control of the flow of product to be distributed in the ground, regardless of the condition of the soil and/or the size of the product to be distributed;
- possibility of using the system with agricultural machines already in use;
- possibility of integrating the control system with electronic systems present in the agricultural machine and/or use of stand-alone electronic systems, in order to guarantee a constant distribution process of products regardless of the conditions and unevenness of the ground.

## Claims

1. An agricultural machine, in particular a seeding machine and/or a fertilizer spreader, comprising a frame and a distribution unit for granular and/or powder products, said agricultural machine being connected to a tractor, wherein said distribution unit comprises at least one tubular element (1) for the transport of said products connected, through a central opening (24), to at least one compartment around which a plurality of shaped outlet sockets (2) face and engage in a radial pattern through which said granular and/or powder products are distributed in the ground, wherein, in a position adjacent to said tubular element (1), there is a first support element (10) and a second support element (13), of said first and second support elements (10, 13) comprising respectively a first joint (6) and a second joint (12), to which a first actuator (8) or a second actuator (9) is respectively connected, said first and/or second actuator (8; 9) being controlled by an electronic control unit and being configured to respectively move said first joint (6) and said second joint (12) around a first axis (X) and/or a second axis (Y) having a direction substantially parallel or perpendicular to the direction of the direction of travel of the agricultural machine, said distribution unit also comprising a head (14) placed above said central opening (24) and a sensor (7) configured to detect the inclination of said head (14) with respect to a terrestrial horizon, wherein said sensor (7) is placed on said tractor and said electronic control unit drives said first actuator (8) and/or said second actuator (9) starting from a series of data received from said sensor (7) and on the basis of a predefined algorithm.

2. The agricultural machine according to claim 1, **characterised in that** said sensor (7) is placed in front of or behind said tractor and is directly connected to an on-board electronics of said tractor.

3. The agricultural machine according to any one of the preceding claims, **characterised in that** it comprises a hinge placed on said tractor and connected to said first actuator (8) and/or said second actuator (9) for the correction of the inclination of said head (14) of the distribution unit, so that this correction is not affected by any structural oscillations of said distribution unit.

4. The agricultural machine according to any one of the preceding claims, **characterised in that** said first support element (10) is connected, through a fixing tab (15), to said second support element (13), located at said central opening (24) of the tubular element (1), said second support element (13) comprising said second joint (12) connected to said fixing tab (15) and said second actuator (9), which is connected to said second joint (12), being configured to move said second joint (12) around a second axis (Y) having a direction orthogonal to said first axis (X).

5. The agricultural machine according to any one of the preceding claims, **characterised in that** said first actuator (8) and/or said second actuator (9) are of the linear type and are in particular electrical cylinders.

6. The agricultural machine according to any one of the preceding claims, **characterised in that** said tubular element (1) is rigid and comprises a flexible final portion, at the head (14) of the distribution unit; to increase the homogeneity of the seeds leaving said distribution unit.

## Patentansprüche

1. Landmaschine, insbesondere eine Sämaschine und/oder ein Düngerstreuer, die einen Rahmen und eine Verteilungseinheit für körnige und/oder pulverförmige Produkte umfasst, wobei die landwirtschaftliche Maschine an einen Traktor angeschlossen ist, wobei die Verteilungseinheit mindestens ein rohrförmiges Element (1) für den Transport der Produkte umfasst, das durch eine zentrale Öffnung (24) mit mindestens einem Fach verbunden ist, um das herum eine Vielzahl geformter Auslassbuchsen (2) angeordnet sind und in einem radialen Muster ineinander greifen, durch das die körnigen und/oder pulverförmigen Produkte im Boden verteilt werden, wobei in einer Position neben dem rohrförmigen Element (1) ein erstes Stützelement (10) und ein zweites Stützelement (13) vorhanden sind, wobei die ersten und zweiten Stützelemente (10, 13) jeweils ein erstes Gelenk (6) und ein zweites Gelenk (12) umfassen, an das ein erster Aktuator (8) oder ein zweiter Aktuator (9) ist jeweils angeschlossen, wobei der erste und/oder zweite Aktuator (8; 9) durch eine elektronische Steuereinheit gesteuert werden und so konfiguriert sind, dass sie das erste Gelenk (6) bzw. das zweite Gelenk (12) um eine erste Achse (X) und/oder eine zweite Achse (Y) bewegen, deren Richtung im Wesentlichen parallel oder senkrecht zur Fahrtrichtung der landwirtschaftlichen Maschine ist, wobei die Verteilungseinheit außerdem einen Kopf (14) umfasst, der über der zentralen Öffnung (24) angeordnet ist, und einen Sensor (7), der so konfiguriert ist, dass er die Neigung des Kopfes (14) in Bezug auf einen terrestrischen Horizont erfasst, wobei der Sensor (7) an der Zugmaschine angebracht ist und die elektronische Steuereinheit das erste Stellglied (8) und/oder das zweite Stellglied (9) ausgehend von einer Reihe von Daten, die von dem Sensor (7) empfangen werden, und auf der Grundlage eines vordefinierten Algorithmus ansteuert.

2. Landmaschine nach Anspruch 1, **dadurch gekennzeichnet, dass** der Sensor (7) vor oder hinter dem Traktor angeordnet ist und direkt mit einer Bordelektronik des Traktors verbunden ist.

3. Landmaschine nach einem der vorhergehenden Ansprüche, **dadurch gekennzeichnet, dass** sie ein Scharnier umfasst, das an dem Traktor angebracht und mit dem ersten Stellglied (8) und/oder dem zweiten Stellglied (9) verbunden ist, um die Neigung des Kopfes (14) der Verteilereinheit zu korrigieren, so dass diese Korrektur nicht durch strukturelle Schwingungen der Verteilereinheit beeinflusst wird.

4. Landmaschine nach einem der vorhergehenden Ansprüche, **dadurch gekennzeichnet, dass** das erste Stützelement (10) über eine Befestigungslasche (15) mit dem zweiten Stützelement (13) verbunden ist, das sich an der zentralen Öffnung (24) des rohrförmigen Elements (1) befindet, wobei das zweite Stützelement (13) das zweite Gelenk (12) umfasst, das mit der Befestigungslasche (15) verbunden ist, und das zweite Betätigungselement (9), das mit dem zweiten Gelenk (12) verbunden ist, so konfiguriert ist, dass es das zweite Gelenk (12) um eine zweite Achse (Y) bewegt, die eine zur ersten Achse (X) orthogonale Richtung hat.

5. Landmaschine nach einem der vorhergehenden Ansprüche, **dadurch gekennzeichnet, dass** das erste Stellglied (8) und/oder das zweite Stellglied (9) vom linearen Typ sind und insbesondere elektrische Zylinder sind.

6. Landmaschine nach einem der vorhergehenden Ansprüche, **dadurch gekennzeichnet, dass** das rohrförmige Element (1) starr ist und einen flexiblen Endabschnitt am Kopf (14) der Verteilereinheit aufweist, um die Homogenität der die Verteilereinheit verlassenden Samen zu erhöhen.

## Revendications

1. Machine agricole, notamment semoir et/ou épandeur d'engrais, comprenant un châssis et une unité de distribution de produits granulaires et/ou pulvérulents, ladite machine agricole étant reliée à un tracteur, ladite unité de distribution comprenant au moins un élément tubulaire (1) pour le transport desdits produits relié, par une ouverture centrale (24), à au moins un compartiment autour duquel une pluralité de douilles de sortie profilées (2) se font face et s'engagent selon un motif radial à travers lequel lesdits produits granulaires et/ou pulvérulents sont distribués dans le sol, dans laquelle, dans une position adjacente audit élément tubulaire (1), se trouvent un premier élément de support (10) et un second élément de support (13), lesdits premier et second éléments de support (10, 13) comprenant respectivement une première articulation (6) et une seconde articulation (12), auxquelles est relié un premier actionneur (8) ou un second actionneur (9) est respectivement connecté, ledit premier et/ou second actionneur (8; 9) étant commandé par une unité de commande électronique et étant configuré pour déplacer respectivement ladite première articulation (6) et ladite seconde articulation (12) autour d'un premier axe (X) et/ou d'un second axe (Y) ayant une direction sensiblement parallèle ou perpendiculaire à la direction de la direction de déplacement de la machine agricole, ladite unité de distribution comprenant également une tête (14) placée au-dessus de ladite ouverture centrale (24) et un capteur (7) configuré pour détecter l'inclinaison de ladite tête (14) par rapport à un horizon terrestre, dans lequel ledit capteur (7) est placé sur ledit tracteur et l'unité de contrôle électronique commande le premier actionneur (8) et/ou le second actionneur (9) à partir d'une série de données reçues dudit capteur (7) et sur la base d'un algorithme prédéfini.

2. Machine agricole selon la revendication 1, **caractérisée en ce que** ledit capteur (7) est placé à l'avant ou à l'arrière dudit tracteur et est directement connecté à une électronique embarquée dudit tracteur.

3. Machine agricole selon l'une quelconque des revendications précédentes, **caractérisée en ce qu'**elle comprend une charnière placée sur ledit tracteur et reliée audit premier actionneur (8) et/ou audit second actionneur (9) pour la correction de l'inclinaison de ladite tête (14) de l'unité de distribution, de sorte que cette correction n'est pas affectée par d'éventuelles oscillations structurelles de ladite unité de distribution.

4. Machine agricole selon l'une quelconque des revendications précédentes, **caractérisée en ce que** ledit premier élément de support (10) est relié, par **l'intermédiaire** d'une patte de fixation (15), audit second élément de support (13), situé au niveau de ladite ouverture centrale (24) de l'élément tubulaire (1), ledit second élément de support (13) comprenant ladite seconde articulation (12) reliée à ladite patte de fixation (15) et ledit second actionneur (9), qui est relié à ladite seconde articulation (12), étant configuré pour déplacer ladite seconde articulation (12) autour **d'un** second axe (Y) ayant une direction orthogonale audit premier axe (X).

5. Machine agricole selon l'une quelconque des revendications précédentes, **caractérisée en ce que** ledit premier actionneur (8) et/ou ledit second actionneur (9) sont de type linéaire et sont notamment des vérins électriques.

6. Machine agricole selon l'une quelconque des revendications précédentes, **caractérisée en ce que** ledit élément tubulaire (1) est rigide et comporte une partie finale flexible, au niveau de la tête (14) de l'unité de distribution; pour augmenter l'homogénéité des semences sortant de ladite unité de distribution.
